# EUROPÄISCHE PATENTANMELDUNG

(11) **EP 1 018 456 A2**
(43) Veröffentlichungstag der Anmeldung: **12.07.2000**
(21) Anmeldenummer: 00100350.8
(22) Anmeldetag: 07.01.2000
(51) Int. Cl.: B60R 22/195, B60R 21/01

(54) **Gasgenerator mit integriertem, elektrischem Bauelement**

(30) Priorität: 08.01.1999 DE 29900178 U
(71) Anmelder: Dittrich, Klaus-Jürgen, 28832 Achim (DE)
(72) Erfinder: Dittrich, Klaus-Jürgen, 28832 Achim (DE)

(57) **Zusammenfassung**

Die Erfindung betrifft einen Gasgenerator für den Gurtstraffer eines Fahrzeuginsassen-Rückhaltesystems, mit einem Gehäuse (44), einer Treibladung (46) in dem Gehäuse, und mit einer in die Treibladung (46) hineinragenden elektrischen Zündvorrichtung (55) mit mindestens zwei Anschlußorganen (70,75). Die Zündvorrichtung (55) zündet beim Ansprechen eines Sensors eine Zündladung (54), die ihrerseits die pyrotechnische Treibladung (46) zündet, wodurch ein Treibmittel explosionsartig expandiert und einen Gurtstraffer auslöst, der den betreffenden Gurt in eine Straffhalteposition zieht. Der Gasgenerator wird über ein elektrisches Kabel, welches als Antenne wirkt und elektromagnetische Streuspannungen empfangen kann, an den Sensor des Kraftfahrzeuges angeschlossen. Um dies zu verhindern besitzen bekannte Gasgeneratoren eine externe zwischen Anschlußkabel und den Anschlußorganen (70,75) angebrachte Spule bzw. angebrachten elektrischen Schaltkreis. Der beschriebene Gasgenerator ist dadurch gekennzeichnet, daß der elektrische Schaltkreis (80) bzw. eine Spule (80) fest an die Anschlußorgane (70,75) angeschlossen ist und nicht extern, sondern in den Gasgenerator bzw. dessen Zündvorrichtung integriert ist.

## Beschreibung

Die Erfindung betrifft einen Gasgenerator für den Gurtstraffer eines Fahrzeuginsassen-Rückhaltesystems, mit einem Gehäuse, einer Treibladung in dem Gehäuse, und mit einer in die Treibladung hineinragenden elektrischen Zündvorrichtung mit mindestens zwei Anschlußorganen.

Derartige Gasgeneratoren sind bekannt, sie besitzen eine Zündvorrichtung, welche beim Ansprechen eines Sensors eine Zündladung zündet, die ihrerseits eine pyrotechnische Treibladung zündet, wodurch ein Treibmittel explosionsartig expandiert und einen Gurtstraffer auslöst, der den betreffenden Gurt in eine Straffhalteposition zieht. Dabei wird der Sensor in der Regel über ein elektrisches Kabel angeschlossen, welches als Antenne wirkt und Streuspannungen empfangen kann. Um die Auslösung von unerwünschten Zündungen aufgrund eingestreuter Spannungen zu verhindern, ist es bekannt, zwischen Sensor und Zündvorrichtung eine Spule in eines der Zuführkabel einzufügen, um zu verhindern, daß die höher frequenten, eingestreuten Spannungen an die Zündstrecke gelangen. Da die eingefügte Spule aufgrund der räumlichen Gegebenheiten beim Einbau des Gasgenerators in einen Gurtstraffer einen vergleichsweise großen Abstand zu der Zündstrecke hat, wird jedoch die Gefahr von Fehlzündungen nicht restlos beseitigt.

Aufgabe der Erfindung ist es, einen Gasgenerator der eingangs genannten Art derart weiterzubilden, daß Fehlzündungen aufgrund eingestreuter Spannungen zuverlässig unterbleiben.

Diese Aufgabe wird bei dem Gasgenerator der eingangs genannten Art erfindungsgemäß durch einen elektrischen Schaltkreis gelöst, der fest an die Anschlußorgane angeschlossen und in die Zündvorrichtung integriert ist.

Die Vorteile der Erfindung liegen insbesondere darin, daß der Schaltkreis, welcher vor die Zündvorrichtung gesetzt wird, fest mit den Anschlußorganen verbunden ist und ein Bestandteil der Zündvorrichtung ist, daß also die Zündvorrichtung den betreffenden Schaltkreis in unmittelbarer Nähe zu der Zündstrecke enthält. Auf diese Weise ist sichergestellt, daß eventuelle Einstreuungen vor dem elektrischen Schaltkreis, der Tiefpaßcharakter besitzt, stattfinden, daß also die eingestreuten, höher frequenten Signale nicht zu der Zündstrecke gelangen können. Eine elektromagnetische Einstreuung zwischen dem elektrischen Schaltkreis und der Zündststrecke findet aufgrund des geringen Abstandes der beiden Elemente nur in vernachlässigbarer Weise statt.

Vorteilhafterweise ist der Schaltkreis zusammen mit den Bauteilen der Zündvorrichtung in Kunststoffmaterial eingegossen oder eingespritzt, so daß die Zündvorrichtung zusammen mit dem Schaltkreis einen festen Körper bildet, der leicht montierbar und verwendbar ist.

Besonders bevorzugt besitzt das Gehäuse des Gasgenerator eine verschließbare Öffnung, in welche die Zündvorrichtung zusammen mit dem Schaltkreis als separates Teil einsetzbar ist und dann das Gehäuse, welches mit einer entsprechenden Treibladung gefüllt ist, verschließt, wobei die Zündvorrichtung dann mit ihrer Zündstrecke und Zündladung in die Treibladung des Gasgenerators hineinragt. Bei dieser Ausführungsform der Erfindung übernimmt also die Zündvorrichtung, welche den Schaltkreis inkludiert, die Funktion eines Verschlusses, der das Gehäuse des Gasgenerators stirnseitig verschließt. Auf der gegenüberliegenden Stirnseite des Gehäuses ist dann ein fragiles Trennelement vorgesehen, welches die Treibladung in dem Gehäuse hält, welches jedoch bei Zündung der Treibladung zerbricht und das Treibmittel gasförmig in einen Druckraum austreten läßt.

Gemäß einer bevorzugten Ausführungsform der Erfindung enthält der Schaltkreis eine Spule, die in Serie zu einem der Anschlußorgane der Zündvorrichtung liegt und damit die Funktion eines Tiefpasses übernimmt. Alternativ lassen sich noch weitere Bauelemente dem Schaltkreis hinzufügen, so daß die Tiefpaßcharakteristik noch verbessert wird.

Gemäß einer alternativen Ausführungsform der Erfindung weist die Gehäusewand des Gasgenerators im Bereich der verschließbaren Öffnung Rastelemente, beispielsweise einen umlaufenden, radial einwärts gerichteten Wulst auf, und diese Vorrichtung besitzt einen Querschnitt, der in die Öffnung des Gehäuses mit geringem Spiel paßt, wobei komplementäre seitliche Rastelemente an der Zündvorrichtung angeordnet sind, die zum Verschließen des Gehäuses in Eingriff mit den Rastelementen der Gehäusewand gelangen. Diese Ausführungsform der Erfindung hat den Vorteil, daß die Zündvorrichtung, welche den elektrischen Schaltkreis enthält, in einfacher Weise lösbar auf das Gehäuse des Gasgenerators auf setzbar ist. Alternativ läßt sich auch eine feste Verbindung zwischen Zündvorrichtung und dem Gehäuse dadurch verwirklichen, daß das Gehäuse nach dem Einsetzen der Zündvorrichtung an vorgegebenen Stellen gegen die Zündvorrichtung verpreßt wird.

Vorteilhafte Weiterbildungen der Erfindung sind durch die Merkmale der Unteransprüche gekennzeichnet.

Im folgenden wird ein Ausführungsbeispiel der Erfindung anhand der Zeichnungen näher erläutert. Es zeigen:
- Fig. 1: eine Seitenansicht eines Gurtstraffers, teilweise im Schnitt; und
- Fig. 2: einen Längsschnitt durch einen erfindungsgemäßen Gasgenerator.

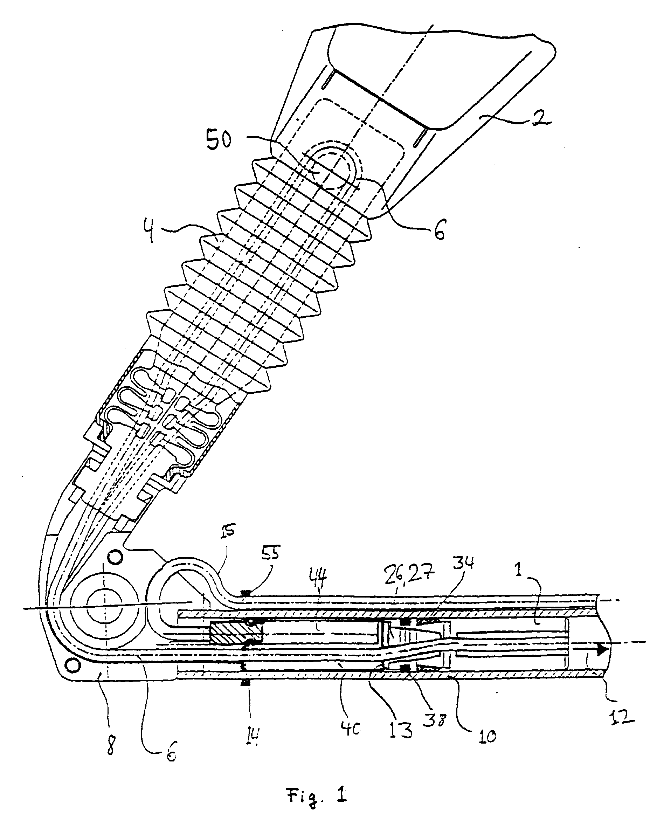

In Fig. 1 ist ein Gurtstraffer mit einem als Gurtschloß ausgebildeten Gurtanlenkglied 2 und einem Zylinderrohr 10 sowie einem in dem Zylinderrohr 10 verschiebbar angeordneten Kolben 1 dargestellt. Der Kolben ist mit dem Gurt an dem Gurtanlenkglied 2 über ein dehnfestes, in zwei Strängen gelegtes Zugseil 6 verbunden, welches mit einer Schlaufe um eine Seilführung 50 des Gurtanlenkgliedes 2 gelegt ist. Weiterhin ist das Zugseil 6 um eine Seilumlenkung 8 und anschließend durch eine Stirnwand 13 und/oder 14, die in dem Zylinderrohr 10 gebildet ist, geführt. Das Zylinderrohr 10 ist an der Seilumlenkung 8 befestigt.

Zwischen einer Stirnwand 13, 14 in dem Zylinderrohr 10 und dem Kolben 1 ist ein Druckraum 26 vorgesehen, in welchem ein Gasgenerator-Gehäuse 40 zur Aufnahme eines Gasgenerators 44 angeordnet ist.

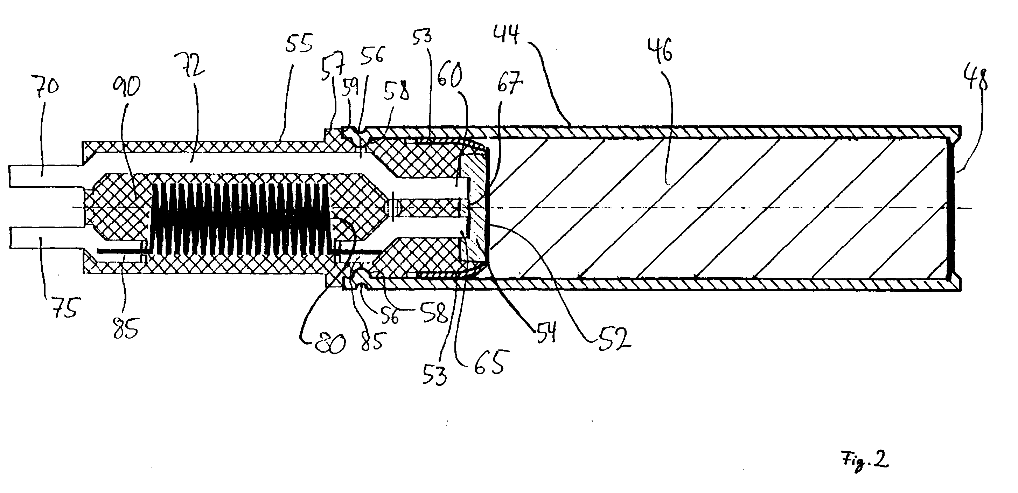

Die Fig. 2 zeigt einen Längsschnitt durch einen Gasgenerator mit einem Gehäuse 44, einer darin befindlichen Treibladung 46 und einer Zündvorrichtung 55. Bei dem Gehäuse 44 handelt es sich im wesentlichen um ein zylinderförmiges Rohr, das beidseitig eine verschließbare Öffnung aufweist. An einem ersten Ende des Rohres ist die Öffnung durch ein dünnes fragiles Trennelement 48 verschlossen.

Das Gehäuse 44, welches an einer Stirnseite mit dem fragilen Trennelement 48 verschlossen ist, ist mit einer Treibladung 46 gefüllt und besitzt - dem Trennelement 48 gegenüber - eine Öffnung, an der die Gehäusewand einen einwärts gerichteten Wulst 57 aufweist. In diese Öffnung ist mit geringem Spiel eine Zündvorrichtung hineingesteckt. Die Zündvorrichtung besitzt eine Zündstrecke 67, um die herum eine Zündlagerung 47 in einem Hohlraum liegt und von einer dünnen Wand 52 um die Zündstrecke 67 herum gehalten wird. Die beiden Zündkontakte 60, 65 gehen in zwei Anschlußorgane 70, 75 über, die aus der Zündvorrichtung herausragen und Steckkontakte bilden, an denen beispielsweise ein Beschleunigungssensor etc. anschließbar ist. Zwischen der Zündstrecke 67, und zwar zwischen einem der Zündkontakte 65 und einem der Anschlußorgane 75 ist ein Schaltkreis 80 eingefügt, der hier in der dargestellten Ausführungsform als Spule dargestellt ist, der jedoch auch als eine andere Tiefpaßschaltung ausgebildet sein kann.

Die Zündkontakte 60, 65, die zwischen diesen Kontakten liegen, die Zündstrecke 67, der Schaltkreis 80 und die Anschlußorgane 70, 75 sind - in der dargestellten Ausführungsform - in eine Kunststoffmasse eingegossen und bilden zusammen mit der von einer Verschlußkappe 52, 53 gehaltenen Zündladung eine Baueinheit, die die Öffnung des Gasgenerator-Gehäuses 44 verschließt. Die Zündvorrichtung besitzt zum lösbaren Einsetzen in das Gehäuse 44 eine Ringnut 58, die mit dem Ringwulst 56 komplementäre Rastelemente bildet. Alternativ läßt sich auch der Ringwulst 56 durch geeignetes Preßwerkzeuge erst nach dem Einsetzen der Zündvorrichtung in die entsprechende Ringnut 58 hineinpressen, um eine bleibende feste Verbindung von Zündvorrichtung und Gasgeneratorgehäuse zu schaffen.

## Patentansprüche

1. Gasgenerator für den Gurtstraffer eines Fahrzeuginsassen-Rückhaltesystems, mit einem Gehäuse (44), einer Treibladung (46) in dem Gehäuse, und mit einer in die Treibladung hineinragenden elektrischen Zündvorrichtung (55) mit mindestens zwei Anschlußorganen (70, 75),
gekennzeichnet durch einen elektrischen Schaltkreis (80), der fest an die Anschlußorgane (70, 75) angeschlossen und in die Zündvorrichtung (55) integriert ist.

2. Gasgenerator nach Anspruch 1,
dadurch gekennzeichnet, daß der Schaltkreis (85) in Kunststoffmaterial (90) eingeschlossen ist.

3. Gasgenerator nach einem der vorstehenden Ansprüche,
dadurch gekennzeichnet, daß das Gehäuse (44) mindestens eine verschließbare Öffnung aufweist und daß die Zündvorrichtung (55) zusammen mit dem Schaltkreis (80) als separater Teil ausgebildet ist, in die Öffnung einsetzbar ist und die Öffnung verschließt.

4. Gasgenerator nach einem der vorstehenden Ansprüche,
dadurch gekennzeichnet, daß der Schaltkreis (80) zusammen mit der Zündvorrichtung (55) in Kunststoffmaterial eingeschlossen ist.

5. Gasgenerator nach einem der vorstehenden Ansprüche,
dadurch gekennzeichnet, daß der Schaltkreis (80) eine Spule enthält, die in Serie zu einem der Anschlußorgane (70, 75) liegt.

6. Gasgenerator nach einem der vorstehenden Ansprüche,
dadurch gekennzeichnet, daß der Schaltkreis einen Tiefpaß enthält.

7. Gasgenerator nach einem der vorstehenden Ansprüche,
dadurch gekennzeichnet, daß die Zündvorrichtung (55) eine Zündladung (47) in einer Zündkammer (54), ein die Zündladung (47) von der Treibladung (46) trennendes fragiles Trennelement (52) und eine in der Zündladung (47) liegende Zündstrecke (67) enthält, deren Zündkontakte (60, 65) über den Schaltkreis (80) mit den Anschlußorganen (70, 75) verbunden sind.

8. Gasgenerator nach einem vorstehenden Ansprüche,
dadurch gekennzeichnet, daß das Gehäuse (44) an einer Stirnseite das fragile Trennelement (52) und gegenüberliegend die verschließbare Öffnung enthält, daß die Gehäusewand im Bereich der verschließbaren Öffnung Rastelement aufweist und daß die Zündvorrichtung (55) einen in die Öffnung passenden, die Öffnung verschließenden Querschnitt und komplementäre seitliche Rastelement beim Eingriff in die Rastelemente des Gehäuses aufweist.
